(19) Europäisches Patentamt / European Patent Office / Office européen des brevets

(11) **EP 3 868 024 B1**

(12) **EUROPEAN PATENT SPECIFICATION**

(45) Date of publication and mention
of the grant of the patent:
**04.10.2023 Bulletin 2023/40**

(21) Application number: **18803657.8**

(22) Date of filing: **14.11.2018**

(51) International Patent Classification (IPC):
*H04B 1/00* *(2006.01)*    *H04L 5/00* *(2006.01)*

(52) Cooperative Patent Classification (CPC):
**H04B 1/0053; H04B 1/0067; H04L 5/001;**
Y02D 30/70

(86) International application number:
**PCT/EP2018/081158**

(87) International publication number:
**WO 2020/098928 (22.05.2020 Gazette 2020/21)**

(54) **DOWNCONVERSION USING DIGITAL CARRIER SIGNALS**

ABWÄRTSWANDLUNG UNTER VERWENDUNG VON DIGITALEN TRÄGERSIGNALEN

CHANGEMENT DE FRÉQUENCE À L'AIDE DE SIGNAUX DE PORTEUSE NUMÉRIQUES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**25.08.2021 Bulletin 2021/34**

(73) Proprietor: **Huawei Technologies Co., Ltd.
Longgang District
Shenzhen, Guangdong 518129 (CN)**

(72) Inventor: **ELORANTA, Petri
16440 Kista (SE)**

(74) Representative: **Gill Jennings & Every LLP
The Broadgate Tower
20 Primrose Street
London EC2A 2ES (GB)**

(56) References cited:
EP-A1- 3 035 544      EP-A1- 3 035 544
US-A1- 2009 325 520   US-A1- 2009 325 520
US-A1- 2017 104 507   US-A1- 2017 104 507

**Description**

TECHNICAL FIELD

The disclosure relates to a field of wireless radio communications, and more particularly to a radio frequency, RF, receiver for receiving carrier aggregated RF signals. Furthermore, the disclosure relates to corresponding methods and a mobile device.

BACKGROUND

Using carrier aggregation, CA, a device, such as a mobile device or a network access device, may receive radio frequency, RF, signals via different RF channels. The RF channels may be in the same RF band. This may be referred to as intra-band CA. Alternatively, the RF channels may be in different RF bands, which may be referred to as inter-band CA. After a device receives an RF signal, the device may need to downconvert the received signal to a lower intermediate frequency, IF, from the RF frequency. This can be achieved, for example, by feeding the RF signal and a carrier signal into a mixer.

When multiple RF channels are received via CA, each received RF channel may require a corresponding carrier signal to be generated in the receiving device. Thus, there may be cross-talk and intermodulation between the carrier signals, which may degrade the reception quality. Furthermore, if each RF signal is received using a separate receiver path, the power consumption of the device may increase. On the other hand, if the RF signals are received using a single received path, large frequency separation between the RF signals may be difficult to remove in the downconversion, which may complicate filtering in later signal processing steps.

EP3035544 A1 discloses a receiver architecture using separate receive paths in a carrier aggregation context, wherein harmful path crosstalk is mitigated by shifting local oscillator frequencies.

SUMMARY

This summary is provided to introduce a selection of concepts in a simplified form that are further described below in the detailed description. This summary is not intended to identify key features or essential features of the claimed subject matter, nor is it intended to be used to limit the scope of the claimed subject matter.

It is an object to provide an RF receiver for receiving carrier aggregated signals. The object is achieved by the features of the independent claims. Further implementation forms are provided in the dependent claims.

Many of the attendant features will be more readily appreciated as they become better understood by reference to the following detailed description considered in connection with the accompanying drawings.

DESCRIPTION OF THE DRAWINGS

The present description will be better understood from the following detailed description read in light of the accompanying drawings, wherein:

FIG. 1 illustrates a schematic representation of an RF receiver configured to receive carrier aggregated RF signals according to an embodiment;
FIG. 2 illustrates a schematic representation of RF channels according to an embodiment;
FIG. 3 illustrates a schematic representation of an RF receiver according to an embodiment;
FIG. 4 illustrates a schematic representation of a direct digital frequency synthesizer, DDFS, according to an embodiment;
FIG. 5 illustrates a schematic representation of a digital mixer according to an embodiment;
FIG. 6 illustrates a schematic representation of a digital mixer with two digital carrier signals according to an embodiment;
FIG. 7 illustrates a schematic representation of RF downconversion according to an embodiment;
FIG. 8 illustrates a schematic representation of an RF receiver comprising two DDFSs according to an embodiment;
FIG. 9 illustrates a schematic representation of an RF receiver comprising a plurality of DDFSs according to an embodiment;
FIG. 10 illustrates a schematic representation of RF channels according to an embodiment; and
FIG. 11 illustrates a schematic representation of an RF receiver comprising two DDFSs according to an embodiment.

Like references are used to designate like parts in the accompanying drawings.

## DETAILED DESCRIPTION

The detailed description provided below in connection with the appended drawings is intended as a description of the embodiments and is not intended to represent the only forms in which the embodiment may be constructed or utilized. However, the same or equivalent functions and structures may be accomplished by different embodiments.

In a wideband radio receiver, the analog carrier signal for downconversion of RF signals may be generated using a digitally controlled oscillator, VCO/DCO, based frequency synthesizer, SX. The frequency synthesizer is capable of generating a single high quality carrier signal with a limited frequency range.

The receiving of two non-contiguous channels may require two separate receiver paths and two SX-blocks. Using two signal paths may double the power consumption of the device, and predisposes the SX blocks to pulling and intermodulation effects. Due to the circuit non-idealities and cross-talk, more than one LO signals can generate continuous wave, CW, spurs in various locations in the spectrum. The intermodulation spurs can cause downconversion of undesired signals in the baseband. These effects can be more severe in the case of intra-band CA, since the frequency separation between the carrier signals may be small.

Even if non-contiguous RF channels are located in the same frequency band, the downconversion of signals from both channels using a single receiver path may lead to a non-optimal signal-to-noise ratio, SNR, as the downconverted baseband signals may have a similar frequency separation as in RF. In addition, the power difference in the RF signals could still exist between the downconverted baseband signals. With a single receiver path, the architecture suffers from a limitation: the functionality is feasible only for intra-band CA cases.

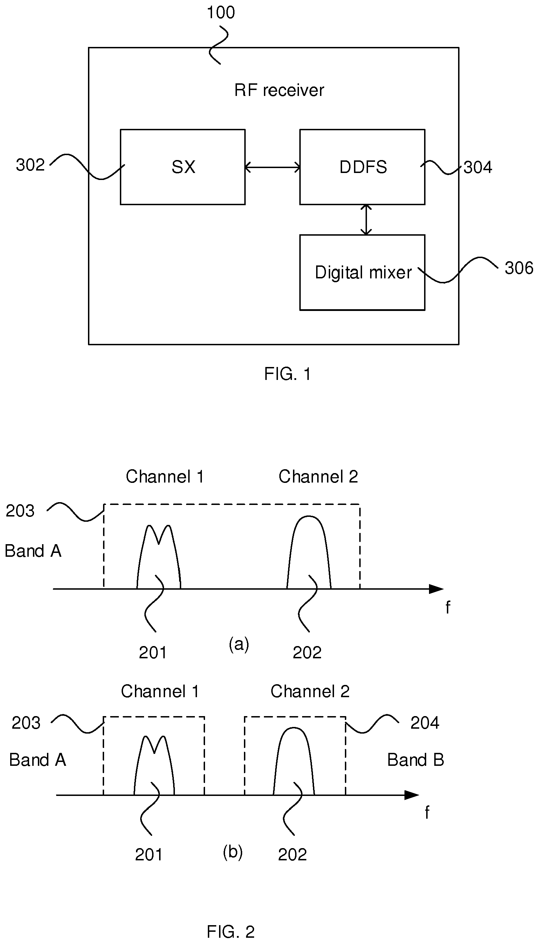

FIG. 1 illustrates a schematic representation of an RF receiver 100 according to an embodiment. The RF receiver 100 may be a device or it may be part of a device. For example, the RF receiver 100 may be a mobile device, or the RF receiver 100 may refer to a part of the mobile device that implements reception of RF signals.

According to an embodiment, the RF receiver 100 comprises a frequency synthesizer, SX, 302 configured to generate a clock signal. The RF receiver 100 may further comprise a first frequency synthesizer, for example a first direct digital frequency synthesizer, DDFS, 304. The first DDFS 304 may be configured to generate a first digital carrier signal, LO1, using the clock signal. The RF receiver 100 may further comprise a second frequency synthesizer, for example a second DDFS, 304 (not shown in FIG. 1). The second DDFS 304 may be configured to generate a second digital carrier signal, LO2, using the clock signal. The RF receiver 100 may also comprise a digital mixer 306, configured to downconvert a first analog radio frequency signal, RF1, to a first intermediate frequency, IF1, and a second analog radio frequency signal, RF2, to a second intermediate frequency, IF2, using the LO1 and the LO2. Since the carrier signals are digital signals, effects such as intermodulation and pulling effects may be reduced. This may improve reception quality. Furthermore, since both of the RF signals may be downconverted using the single digital mixer, the RF receiver 100 may receive the RF signals using a single signal path, which may reduce the power consumption of the RF receiver 100. For simplicity, the following embodiments will be described as including DDFSs. However, it should be clear to the skilled person that any other frequency fynthesizer may be used instead. For instance, an alternative way of implementation may include an analogue frequency synthesis with digital multiplying/dividing and filtering.

The RF receiver 100 may be part of, for example, a client device or a network access device in a wireless communication system. The RF receiver 100 may be configured to perform the functionalities and operations relating to it as described in the embodiments. For example, a client device may receive RF signals from a network access device using the RF receiver 100, or a network access device may receive RF signals from a client device using the RF receiver 100.

According to an embodiment, RF may comprise, for example, any frequency in the range of 3 hertz, Hz, - 3 terahertz, THz. The RF may comprise, for example, frequency ranges that may be referred to as microwave or millimetre wave. The RF receiver 100 may be utilised for various different technologies, such as Long Term Evolution, LTE, 5G new radio, NR, and Wi-Fi.

A client device may be any of a User Equipment (UE) in Long Term Evolution (LTE) or 5G new radio (NR), mobile station (MS), wireless terminal, or mobile terminal which is enabled to communicate wirelessly in a wireless communication system, sometimes also referred to as a cellular radio system. The client device may further be referred to as a mobile telephone, a cellular telephone, a computer tablet or a laptop with wireless capability. The client device in the present context may be, for example, a portable, pocket-storable, hand-held, computer-comprised, or vehicle-mounted mobile device, enabled to communicate voice or data, via a radio access network, with another entity, such as another receiver or a server. The client device 100 can be a Station (STA) which is any device that contains an IEEE 802.11-conformant Media Access Control (MAC) and Physical Layer (PHY) interface to the Wireless Medium (WM).

A network access device may be a transmission or reception point, TRP, or a NR 5G base station, gNB. The network access device may be a base station, a (radio) network node or an access node or an access point or a base station, e.g., a Radio Base Station (RBS), which in some networks may be referred to as a transmitter, "eNB", "eNodeB", "gNB", "gNodeB", "NodeB", or "B node", depending on the technology and terminology used. The radio network nodes may be of different classes such as, e.g., macro eNodeB, home eNodeB or pico base station, based on transmission power and thereby also cell size. The radio network node can be a Station (STA) which is any device that contains an IEEE 802.11-conformant Media Access Control (MAC) and Physical Layer (PHY) interface to the Wireless Medium (WM).

FIG. 2 illustrates a schematic representation of RF channels according to an embodiment. In carrier aggregation, CA, applications more than one RF channel may be received simultaneously, for example in order to increase the data rate. The received channels can be located in the same frequency band, also referred to as intra-band CA, as illustrated in subfigure (a) of FIG. 2. In this embodiment, channel 1 201 and channel 2 202 are both located in the same band 203. Alternatively, the channels may be located in different bands, also referred to as inter-band CA, as illustrated in subfigure (b) of FIG. 2. In this embodiment, channel 1 201 is located in a first band 203, and channel 2 is located in a second band 204. Channel 1 201 may be referred to as a primary component carrier, PCC, and channel 2 202 may be referred to as a secondary component carrier, SCC, or vice versa. In intra-band CA, the frequency separation of the two or more channels may be limited by the bandwidth of the frequency band. In the case of inter-band CA, however, the channels can have several gigahertz of frequency separation.

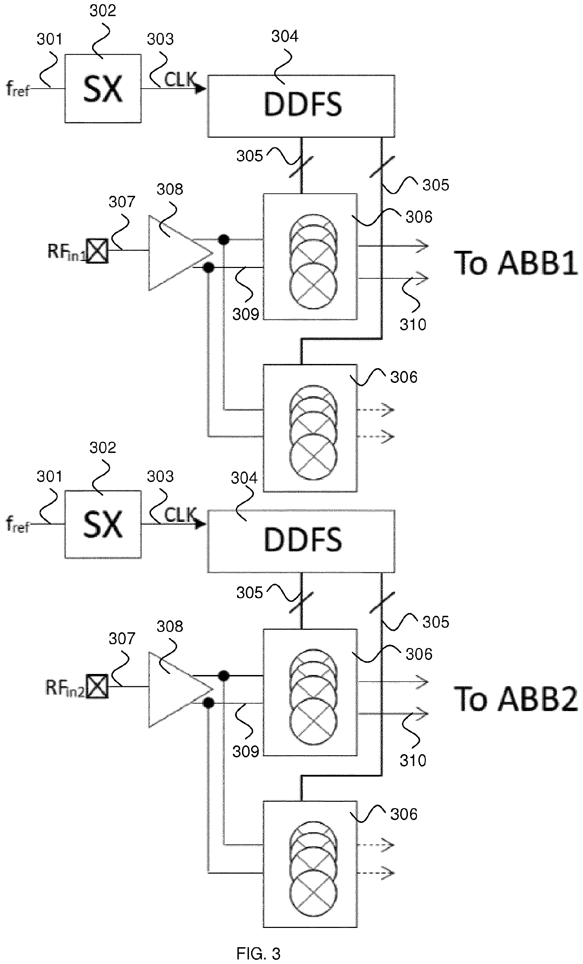

FIG. 3 illustrates a schematic representation of a digital mixer -based receiver architecture according to an embodiment. In this embodiment, the receiver comprises a digital mixer 306, a direct digital frequency synthesizer, DDFS, 304 and an SX-block 302. The carrier signal 305, LO, is generated with the DDFS 304 which provides the digital carrier sine and cosine signals to the digital mixers 306. A carrier signal may also be referred to as a local oscillator signal. The SX-block 302 generates a fixed frequency clock 303 for the DDFS 304. An RF buffer 308 may generate an RF signal 309 based on a received RF signal 301. The digital mixer can downconvert the RF signal 309 using the LO signal 305, producing an IF signal 310. Multiple carriers may be received with individual receiver paths. The digital LO signals 305 control digitally weighted mixer cells to form D/A-conversion to the digital LO signals for the downconversion. A mixer cell may also be referred to as a weighted mixer cell or as a weighted mixer.

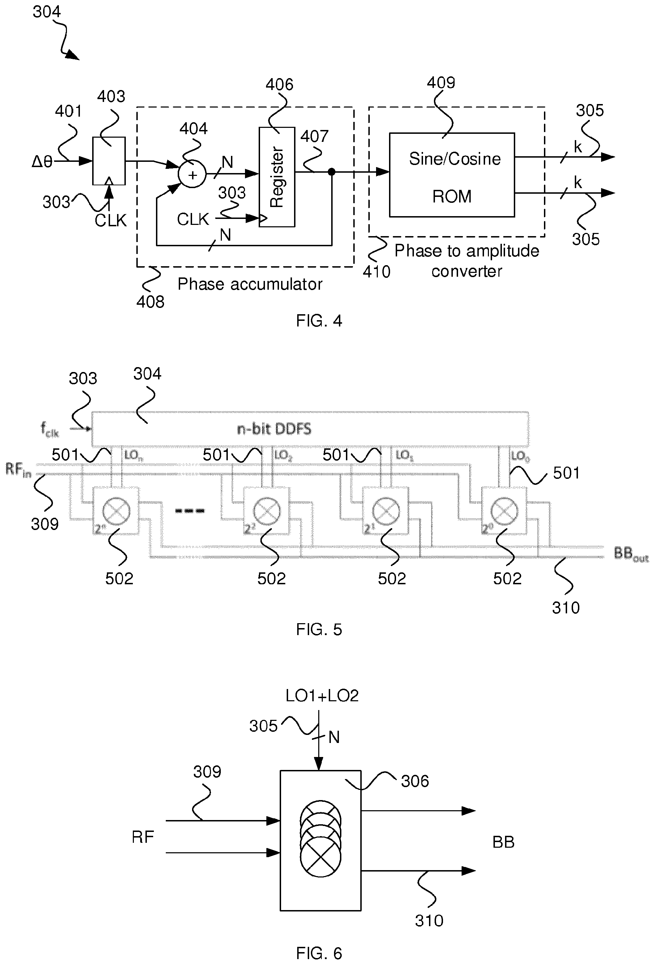

FIG. 4 illustrates a schematic representation of a DDFS 304 according to an embodiment. The frequency generated by the DDFS 304 may be selected by a control word $\Delta\theta$ 401 which controls the phase step in a phase accumulator 408. The control word $\Delta\theta$ 401 and the clock signal 303 can be inputted to a phase increment register 403. Output of the phase increment register 403 can be summed with an output 407 of a phase register 406, and the summed signal can be fed into the phase register 406. Thus, output of the phase register 406 can be incremented in each clock cycle by an amount controlled by the control word $\Delta\theta$ 401. The output 407 can be fed into a phase to amplitude converter 410.

In the phase to amplitude converter 410, the phase data is mapped into amplitude data in a read-only memory, ROM, 409 in order to generate digital sine and/or cosine output waveforms 305 to be used in the digital mixer 306. The ROM 409 may comprise, for example, a look-up table. The DDFS 304 can generate any frequency below its Nyquist frequency with a frequency resolution, and the quadrature accuracy defined by the resolution of the phase accumulator. For example, with a clock frequency of 26.2144GHz and 18bit resolution in the phase accumulator, the DDFS can have a channel raster of 100 kHz. With a high clock frequency, digital images may be located above 20GHz, when <6GHz LO signals are generated.

As the LO signal generation is done with digital logic in the DDFS 304, the architecture can benefit from technology scaling. Silicon technology with smaller transistor sizes may enable the same functionality with lower power consumption. In addition, with the decreased silicon area, the number of DDFS cores can be increased with a low impact on the total silicon area of the receiver.

FIG. 5 illustrates a schematic representation of a digital mixer according to an embodiment. Bits 501 of a digital LO signal control digitally weighted mixer cells 502. In the embodiment presented in FIG. 5, $LO_i$ 501 refers to the ith bit of the digital carrier signal 305 outputted by the DDFS 304. The weight of a mixer cell 502 corresponding to the ith bit may be $2^i$ as illustrated in FIG. 5. The RF signal 309 is fed into each mixer cell 502, and each mixer cell 502 downconverts the RF signal 309 according to the bit control 501 from the DDFS 304 and the weight of the cell.

For example, if the value of the digital carrier signal 305 outputted by the DDFS 304 is denoted by a decimal number x, this can be represented in the binary form as:

$$x = \sum_{i=0}^{N-1} 2^i x[i],$$

where $x[i] \in \{0,1\}$ refers to the ith bit of x, and N is the total number of bits. x may be, for example, the value of a sinusoidal signal at some time instant. In the ith mixer cell 502, the RF signal 309 $f(t)$ is multiplied by the weight of each cell $2^i$ and the corresponding bit value $x[i]$. Thus, the output of each mixer cell 502 may be denoted as $2^i x[i] f(t)$. The baseband signal 310 $g(t)$ produced by the digital mixer 306 is the sum of the outputs of the mixer cells 502:

$$g(t) = \sum_{i=0}^{N-1} \left( 2^i x[i] f(t) \right) = \sum_{i=0}^{N-1} \left( 2^i x[i] \right) f(t) = xf(t)$$

Thus, the digital mixer multiplies the digital carrier signal 501 by the RF signal 309. As a person skilled in the art can appreciate, this can be used to downconvert the RF signal 309 to a lower frequency.

Due to the multi-bit structure, the harmonic content of the digital sinewave comprised in the LO signal 305 is defined by the resolution of the LO signal 305. Therefore, the digital mixer 306 can provide a harmonic-reject mixing functionality with the array of switching mode mixer-cells 502.

FIG. 6 illustrates a schematic representation of a digital mixer with two carriers according to an embodiment. In this embodiment, two carrier signals 305 are fed into the digital mixer 306. This may be implemented, for example, by summing two LO signals, and using the summed signal as the input for the digital mixer 306. A benefit of using a digital carrier signal 305 for the mixers is that the signal can contain more complex information than just a single carrier tone. For example, by providing two digital sinewaves to the digital mixer 306, two different RF channels can be downconverted with a single digital mixer.

The LO1 comprises a first digital sinusoidal signal at frequency $f_1$, and the LO2 comprises a second digital sinusoidal signal at frequency $f_2$.

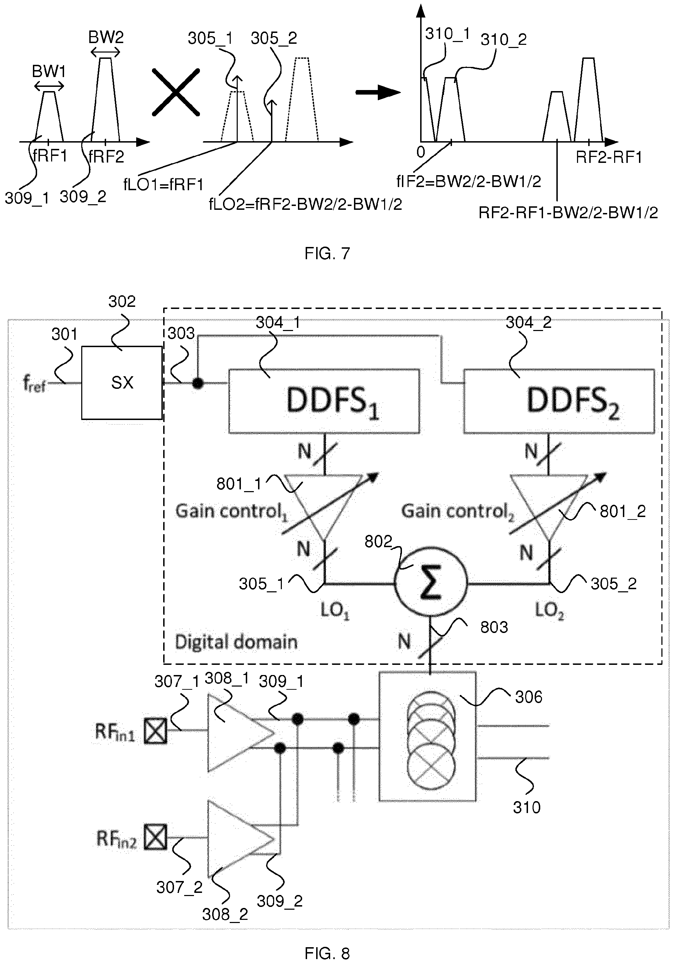

FIG. 7 illustrates a schematic representation of downconversion according to an embodiment. In this embodiment, two RF signals, RF1 309_1 and RF2 309_2, are downconverted by mixing them with two LO signals, LO1 305_1 and LO2 305_2. The centre frequency of RF1 309_1 is denoted by $f_{RF1}$, the frequency bandwidth of RF1 309_1 is denoted by $BW_1$, the centre frequency of RF2 309_2 is denoted by $f_{RF2}$, the frequency bandwidth of RF2 309_2 is denoted by $BW_2$, the frequency of LO1 310_1 is denoted by $f_{LO1}$, and the frequency of LO2 310_2 is denoted by $f_{LO2}$.

In the embodiment of FIG. 7, $f_{LO1} = f_{RF1}$ and $f_{LO2} = f_{RF2} - BW_2/2 - BW_1/2$. As a person skilled in the art can appreciate, with the chosen frequencies, after the downconversion, the centre frequency of RF1 is shifted to intermediate frequency 310_1 $f_{IF1}$ that is zero, and the centre frequency of RF2 is shifted to intermediate frequency 310_2 $f_{IF2} = BW_2/2 - BW_1/2$. Thus, since after downconversion RF1 is located between frequencies 0 and $BW_1/2$, and RF2 is located between frequencies $BW_1/2$ and $BW_1/2 + BW_2$, RF1 and RF2 are contiguous after the downconversion, even though they were non-contiguous before the downconversion. RF1 and RF2 can even be carrier aggregated, and therefore the frequency separation between RF1 and RF2 can even be multiple gigahertz before the downconversion.

Channels of the RF1 and the RF2 are carrier aggregated, CA. In some embodiments, the channels are located in a same frequency band, while in some other embodiments, the channels are located in different frequency bands.

The frequencies of the carrier signals can also be chosen differently from the embodiment of FIG. 7. According to an embodiment, substantially $f_1 = f_{RF1} \pm IF1$, and substantially $f_2 = f_{RF2} \pm (BW_2/2 + BW_1/2 + IF1 + F_{OFFSET})$, wherein $f_{OFFSET}$ is a frequency offset between IF1 and IF2. Thus, the frequency offset between RF1 and RF2 after the downconversion may be configured. In some embodiments, IF1 is substantially zero and IF2 is a low intermediate frequency. In some embodiments, $f_{OFFSET}$ is substantially zero, so that RF1 and RF2 are contiguous after the downconversion.

The mixing with two LO signals also generates images of the RF signals to frequencies $f_{RF2} - f_{RF1} - BW_2/2 - BW_1/2$ and $f_{RF2} - f_{RF1}$. These image signals may be removed using a baseband filter. The cut-off frequency of the baseband filter may be, for example, $BW_1/2 + BW_2$, so that the image signals are removed without significantly filtering the downconverted RF signals in the baseband. With the proximity of RF1 and RF2 being large enough, the image frequencies fall into the stopband of the baseband filter.

After A/D-conversion of the combined baseband signal, the I and Q signals of RF2 can be downconverted and demodulated in the digital domain. The signal power difference between RF1 and RF2 can be compensated for with a difference in the gains of the LO signals 305_1, 305_2, which can be implemented by controlling the amplitude of the digital carrier signals LO1 305_1 and LO2 305_2. The maximum frequency separation of the two channels may depend on the bandwidth of the RF front-end. By using, for example, two parallel low-noise amplifiers, LNAs, operating in different frequency bands, the architecture can be expanded for inter-band CA cases.

FIG. 8 illustrates a schematic representation of an RF receiver comprising two DDFSs 304 according to an embodiment. According to an embodiment, the first 304_1 and the second DDFSs 304_2 are configured in parallel. Each DDFS 304_1, 304_2 can generate an LO signal 305_1, 305_2. According to an embodiment, the RF receiver 100 further comprises a summation block 802, configured to sum the LO1 305_1 and the LO2 305_2, producing a digital sum signal 803, and input the digital sum signal 803 into the digital mixer 306. The sum signal 803 may be, for example, a single N-bit data stream.

According to an embodiment, the RF receiver 100 further comprises a first gain control 801_1, configured to control a gain of the LO1 305_1; and a second gain control 801_2, configured to control a gain of the LO2 305_2. In order to avoid an overflow in the sum signal 803, for example, the gain controls 801_1, 801_2 can be added to the outputs of the DDFS blocks 304_1, 304_2. The gain controls 801_1, 801_2 can also be used to equalise signal power differences between RF1 and RF2.

As the two carriers can be produced as N-bit data streams of pulses, they can be insensitive to pulling and intermodulation effects unlike, for example, two oscillators operating with a small frequency offset and small physical proximity in silicon. The interface to the digital mixer does not need modification, as all of the modifications can be done in the digital domain.

According to an embodiment, the digital mixer 306 comprises a plurality of weighted mixers 502, wherein each weighted mixer 502 is controlled by a bit of the digital sum signal 803.

According to an embodiment, the RF receiver 100 further comprises: a first RF buffer 308_1 configured to output the RF1 from a first received RF signal; a second RF buffer 308_2 configured to output the RF2 from a second received RF signal. A separate RF buffer 308_1, 308_2 for each received RF signal 307_1, 307_2 may be used, for example, in the case of inter-band CA. In the case of intra-band CA, a single RF buffer can be used. The RF buffers 308_1, 308_2 can produce the RF signals 309_1, 309_2 from the received RF signals 307_1, 307_2. The RF buffers 308_1, 308_2 can, for example, perform amplification and impedance matching to the received RF signals 307_1, 307_2 in order to produce the RF signals 309_1, 309_2.

The RF signals 309_1, 309_2 and the summed LO signal 803 can be fed into the digital mixer in order downconvert the RF signals 309_1, 309_2 to IF signals 310, for example as described in the embodiment of FIG. 7. After the downconversion, image frequencies may be removed from the IF signals 310 using, for example, a baseband low-pass filter.

The digital mixer 306 is further configured to receive the RF1 309_1 and the RF2 309_2 via a single analog receiver path.

With the architecture described in the embodiments, a single analog receiver path can be used for receiving more than one non-contiguous RF channels. Due to the digital LO generation and downconversion, the receiver may be less sensitive to cross-talk and intermodulation of the two LO signals when compared to parallel traditional receiver architectures. The two received RF channels can be located in arbitrary frequency bands by using, for example, parallel RF buffers that can be tuned for the selected bands with their outputs connected to the mixer input. The increased complexity in multi-channel reception may have an impact, for example, on the digital domain with the parallel DDFS blocks and the digital demodulation of the low-IF secondary component carrier, SCC. The increased digital complexity, however, may benefit from silicon technology scaling. Adjacent channel blocker cases may need to be considered in order to prevent the adjacent channel from falling on top of the baseband signal.

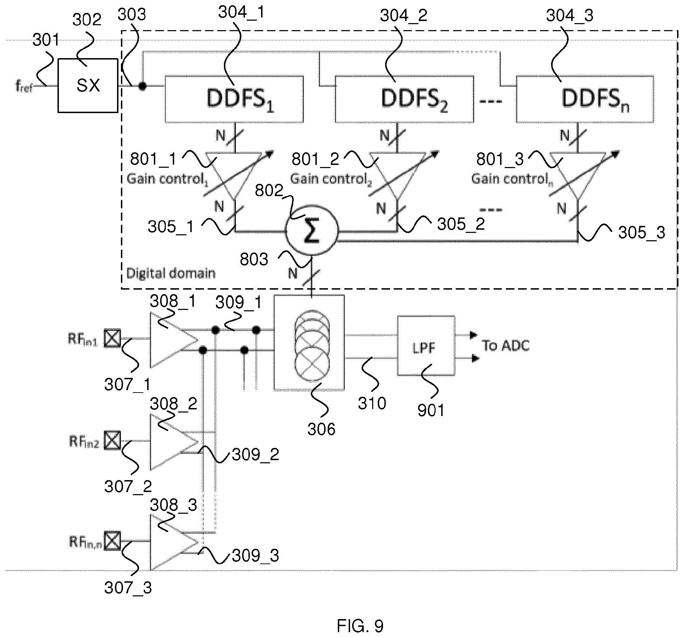

FIG. 9 illustrates a schematic representation of a multicarrier RF receiver according to an embodiment. In this embodiment, more than two RF signals 309 can be received simultaneously. The number of received carriers depends on the number of DDFS cores. For each RF signal to be received, an additional DDFS 304_3 may be used. Similarly to the previous embodiment, the gain of each LO signal 305_1, 305_2, 305_3 may be controlled using a gain control 801_1, 801_2, 801_3, and all of the LO signals 305_1, 305_2, 305_3 can be summed in the summing block 802 in order to produce a single summed LO signal 803 which can be inputted to the digital mixer 306. The number of RF buffers may be related to the number of the different frequency bands in which the received carriers are located. The RF signals 309_1, 309_2, 309_3 and the summed LO signal 803 can be inputted to the digital mixer 306 in order to produce IF signals, 310 for example in a similar fashion as in the embodiment of FIG. 7. The IF signals may be filtered using a low-pass filter, LPF, 901, also referred to as a baseband filter, in order to remove image frequencies, such as those described in the embodiment of FIG. 7. As a person skilled in the art can appreciate, since there may be a higher number of RF signals and/or LO signals in the embodiment of FIG. 9 compared to the embodiments of FIG. 7 and FIG. 8, that various other image frequencies may also be produced during the mixing. Although only three DDFSs and RF signal paths are depicted in FIG. 9, various RF signals and DDFSs may be configured in a similar fashion.

According to an embodiment, the RF receiver 100 comprises n DDFSs 304_1, 304_2, 304_3, wherein each DDFS is configured to generate a digital carrier signal, LO, 305_1, 305_2, 305_3; wherein the digital mixer 306 is further configured to: downconvert n analog RF signals 309_1, 309_2, 309_3 to n intermediate frequencies using the LOs. n may be, for example, $n > 2$.

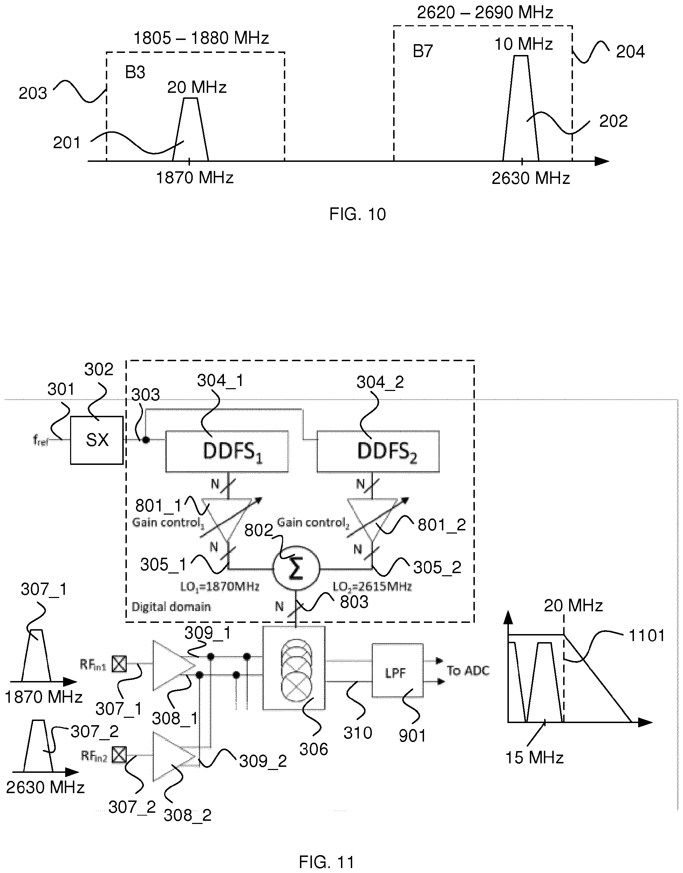

FIG. 10 illustrates a schematic representation of inter-band channels according to an embodiment. In this embodiment, a first channel 201 is in band 3 203, wherein band 3 203 comprises frequencies of 1805 - 1880 MHz. The centre frequency and the frequency bandwidth of the first channel 201 are 1870 MHz and 20 MHz, respectively. A second channel 202, on the other hand, is located in band 7 204, wherein band 7 204 comprises frequencies of 2620 - 2690 MHz. The centre frequency and the frequency bandwidth of the second channel 202 are 2630 MHz and 10 MHz, respectively. Thus, the first channel 201 and the second channel 202 are inter-band channels.

FIG. 11 illustrates a schematic representation of an RF receiver according to an embodiment. This embodiment describes the downconversion of the RF signal in bands 201, 202 illustrated in the embodiment of FIG. 10. A first LO produced by the first DDFS 304_1 is configured so that a first RF signal 309_1 is downconverted to zero IF. A second LO signal produced by the second DDFS 304_2 is configured so that a second RF signal 309_2 is downconverted to a 15MHz intermediate frequency. As was described in relation to the embodiment of FIG. 7 above, the frequency of the first LO signal should be $f_{LO1} = f_{RF1} = 1870MHZ$, and the frequency of the second LO signal should be $f_{LO2} = f_{RF2} - BW_2/2 - BW_1/2 = 2630MHz - 10MHz/2 - 20MHz/2 = 2615MHz$. After the downconversion, images of the RF signals are generated to frequencies $f_{RF2} - f_{RF1} - BW_2/2 - BW_1/2 = 2630MHz - 1870MHz - 10MHz/2 - 20MHz/2 = 745MHz$ and $f_{RF2} - f_{RF1} = 760MHz$. Since the frequency bandwidth of RF2 is 10 MHz and the centre frequency of RF2 after the mixing is 15 MHz, the cut-off frequency 1101 of the baseband low-pass filter 901 can be configured to be 20MHz. Thus, the downconverter RF1 and RF2 are not attenuated significantly by the low-pass filter 901, while the aforementioned image frequencies, and other unwanted frequencies, can be filtered out efficiently.

The functionality described herein can be performed, at least in part, by one or more computer program product components such as software components. For example, the operations and functions of DDFS 304 may be performed accordingly. Furthermore, a part of the operations and functions of the digital mixer 306 may be performed accordingly. Alternatively, or in addition, the functionality described herein can be performed, at least in part, by one or more hardware logic components. For example, and without limitation, illustrative types of hardware logic components that can be used include Field-programmable Gate Arrays (FPGAs), Program-specific Integrated Circuits (ASICs), Program-specific Standard Products (ASSPs), System-on-a-chip systems (SOCs), Complex Programmable Logic Devices (CPLDs), Graphics Processing Units (GPUs).

Any range or device value given herein may be extended or altered without losing the effect sought. Also any embodiment may be combined with another embodiment unless explicitly disallowed.

Although the subject matter has been described in language specific to structural features and/or acts, it is to be understood that the subject matter defined in the appended claims is not necessarily limited to the specific features or acts described above. Rather, the specific features and acts described above are disclosed as embodiments of implementing the claims and other equivalent features and acts are intended to be within the scope of the claims.

It will be understood that the benefits and advantages described above may relate to one embodiment or may relate to several embodiments. The embodiments are not limited to those that solve any or all of the stated problems or those that have any or all of the stated benefits and advantages. It will further be understood that reference to 'an' item may refer to one or more of those items. The term 'and/or' may be used to indicate that one or more of the cases it connects may occur. Both, or more, connected cases may occur, or only either one of the connected cases may occur.

The operations of the methods described herein may be carried out in any suitable order, or simultaneously where appropriate. Additionally, individual blocks may be deleted from any of the methods without departing from the scope of the subject matter described herein. Aspects of any of the embodiments described above may be combined with aspects of any of the other embodiments described to form further embodiments without losing the effect sought. The scope of the invention is defined by the appended claims.

The term 'comprising' is used herein to mean including the method, blocks or elements identified, but that such blocks or elements do not comprise an exclusive list and a method or apparatus may contain additional blocks or elements.

It will be understood that the above description is given by way of example only and that various modifications may be made by those skilled in the art. The above specification, embodiments and data provide a complete description of the structure and use of exemplary embodiments. Although various embodiments have been described above with a certain degree of particularity, or with reference to one or more individual embodiments, those skilled in the art could make numerous alterations to the disclosed embodiments without departing from the scope of the invention as defined by the appended claims.

**Claims**

1. A radio frequency, RF, receiver (100), comprising:

   a frequency synthesizer (302), configured to:
   generate a clock signal (303);
   a first frequency synthesizer (304_1), configured to:
   generate a first digital carrier signal, LO1 (305_1), using the clock signal;
   a second frequency synthesizer (304_2), configured to:
   generate a second digital carrier signal, LO2 (305_2), using the clock signal; and
   a digital mixer (306), configured to:
   downconvert a first analog radio frequency signal, RF1 (309_1), to a first intermediate frequency, IF1 (310_1), and a second analog radio frequency signal, RF2 (309_2), to a second intermediate frequency, IF2 (310_2), using the LO1 and the LO2;
   wherein channels of the RF1 and the RF2 are carrier aggregated, CA;
   wherein the digital mixer is further configured to receive the RF1 and the RF2 via a single analog receiver path; and
   wherein the LO1 comprises a first digital sinusoidal signal at frequency $f_1$, and the LO2 comprises a second digital sinusoidal signal at frequency $f_2$.

2. The RF receiver of any preceding claim, further comprising:

a first RF buffer (308_1) configured to output the RF1 from a first received RF signal (307_1); and
a second RF buffer (308_2) configured to output the RF2 from a second received RF signal (307_2).

3. The RF receiver of claim 1, wherein the channels are located in a same frequency band.

4. The RF receiver of claim 1,
wherein the channels are located in different frequency bands.

5. The RF receiver of any preceding claim, wherein the RF1 comprises:

a first frequency bandwidth, $BW_1$;
a first centre frequency, $f_{RF1}$;

RF2 comprises:

a second frequency bandwidth, $BW_2$;
a second centre frequency, $f_{RF2}$.

6. The RF receiver of claim 4, wherein substantially $f_1 = f_{RF1} \pm IF1$, and substantially $f_2 = f_{RF2} \pm (BW_2/2 + BW_1/2 + IF1 + f_{OFFSET})$, wherein $f_{OFFSET}$ is a frequency offset between IF1 and IF2.

7. The receiver of claim 4, wherein IF1 is substantially zero and IF2 is a low intermediate frequency.

8. The RF receiver of claim 6, wherein $f_{OFFSET}$ is substantially zero, so that RF1 and RF2 are contiguous after the downconversion.

9. The RF receiver of any preceding claim, further comprising:

a first gain control (801_1), configured to:
control a gain of the LO1; and
a second gain control (801_2), configured to:
control a gain of the LO2.

10. The RF receiver of any preceding claim, further comprising:
a summation block (802), configured to:

sum the LO1 and the LO2, producing a digital sum signal (803); and
input the digital sum signal into the digital mixer.

11. A mobile device comprising the RF receiver according to any preceding claim.

12. A method, comprising:

generating, by a frequency synthesizer, a clock signal;
generating, by a first frequency synthesizer a first digital carrier signal, LO1, using the clock signal;
generating, by a second frequency synthesizer, a second digital carrier signal, LO2, using the clock signal; and
downconverting, by a digital mixer, a first analog radio frequency signal, RF1, to a first intermediate frequency, IF1, and a second analog radio frequency signal, RF2, to a second intermediate frequency, IF2, using the LO1 and the LO2;
receiving, by the digital mixer, the RF1 and the RF2 via a single analog receiver path;
wherein channels of the RF1 and the RF2 are carrier aggregated, CA;
wherein the LO1 comprises a first digital sinusoidal signal at frequency $f_1$, and the LO2 comprises a second digital sinusoidal signal at frequency $f_2$.

**Patentansprüche**

1. Hochfrequenz, HF, -Empfänger (100), umfassend:

   einen Frequenzsynthetisierer (302), der ausgelegt ist zum:
   Erzeugen eines Taktsignals (303);
   einen ersten Frequenzsynthetisierer (304_1), der ausgelegt ist zum:
   Erzeugen eines ersten digitalen Trägersignals, LO1 (305_1), unter Verwendung des Taktsignals;
   einen zweiten Frequenzsynthetisierer (304_2), der ausgelegt ist zum:
   Erzeugen eines zweiten digitalen Trägersignals, LO2 (305_2), unter Verwendung des Taktsignals; und
   einen digitalen Mischer (306), der ausgelegt ist zum:

   Herunterwandeln eines ersten analogen Hochfrequenzsignals, RF1 ("Radio Frequency") (309_1), auf eine erste Zwischenfrequenz, IF1 ("Intermediate Frequency") (310_1), und eines zweiten analogen Hochfrequenzsignals, RF2 (309_2), auf eine zweite Zwischenfrequenz, IF2 (310_2), unter Verwendung des LO1 und des LO2;
   wobei die Kanäle des RF1 und des RF2 trägeraggregiert, CA ("Carrier Aggregated"), sind;
   wobei der digitale Mischer ferner dafür ausgelegt ist, das RF1 und das RF2 über einen einzigen analogen Empfängerpfad zu empfangen; und
   wobei das LO1 ein erstes digitales sinusförmiges Signal mit einer Frequenz $f_1$ umfasst und das LO2 ein zweites digitales sinusförmiges Signal mit einer Frequenz $f_2$ umfasst.

2. HF-Empfänger nach einem der vorstehenden Ansprüche, ferner umfassend:

   einen ersten HF-Puffer (308_1), der dafür ausgelegt ist, das RF1 aus einem ersten empfangenen HF-Signal (307_1) auszugeben; und
   einen zweiten HF-Puffer (308_2), der dafür ausgelegt ist, das RF2 aus einem zweiten empfangenen HF-Signal (307_2) auszugeben.

3. HF-Empfänger nach Anspruch 1, wobei die Kanäle in demselben Frequenzband liegen.

4. HF-Empfänger nach Anspruch 1, wobei die Kanäle in verschiedenen Frequenzbändern liegen.

5. HF-Empfänger nach einem der vorstehenden Ansprüche, wobei das RF1 umfasst:

   eine erste Frequenzbandbreite, $BW_1$ ("Bandwidth");
   eine erste Mittenfrequenz, $f_{RF1}$,
   RF2 umfasst:

   eine zweite Frequenzbandbreite, $BW_2$;
   eine zweite Mittenfrequenz, $f_{RF2}$.

6. HF-Empfänger nach Anspruch 4,
   wobei im Wesentlichen $f_1 = f_{RF1} \pm IF1$ ist und im Wesentlichen $f_2 = f_{RF2} \pm (BW_2/2 + BW_1/2 + IF1 + f_{OFFSET})$ ist,
   wobei $f_{OFFSET}$ ein Frequenzversatz zwischen IF1 und IF2 ist.

7. Empfänger nach Anspruch 4, wobei IF1 im Wesentlichen Null ist und IF2 eine niedrige Zwischenfrequenz ist.

8. HF-Empfänger nach Anspruch 6, wobei $f_{OFFSET}$ im Wesentlichen Null ist, so dass RF1 und RF2 nach der Herunterwandlung zusammenhängend sind.

9. HF-Empfänger nach einem der vorstehenden Ansprüche, ferner umfassend:

   eine erste Verstärkungssteuerung (801_1), die ausgelegt ist zum:
   Steuern einer Verstärkung des LO1; und
   eine zweite Verstärkungssteuerung (801_2), die ausgelegt ist zum:
   Steuern einer Verstärkung des LO2.

**10.** HF-Empfänger nach einem der vorstehenden Ansprüche, ferner umfassend:
einen Summierungsblock (802), der ausgelegt ist zum:

Summieren von LO1 und LO2, wodurch ein digitales Summensignal (803) erzeugt wird; und
Eingeben des digitalen Summensignals in den digitalen Mischer.

**11.** Mobilvorrichtung, die den HF-Empfänger gemäß einem der vorstehenden Ansprüche umfasst.

**12.** Verfahren, umfassend:

Erzeugen, durch einen Frequenzsynthetisierer, eines Taktsignals;
Erzeugen, durch einen ersten Frequenzsynthetisierer, eines ersten digitalen Trägersignals, LO1, unter Verwendung des Taktsignals;
Erzeugen, durch einen zweiten Frequenzsynthetisierer, eines zweiten digitalen Trägersignals, LO2, unter Verwendung des Taktsignals; und
Herunterwandeln, durch einen digitalen Mischer, eines ersten analogen Hochfrequenzsignals, RF1, auf eine erste Zwischenfrequenz, IF1, und eines zweiten analogen Hochfrequenzsignals, RF2, auf eine zweite Zwischenfrequenz, IF2, unter Verwendung des LO1 und des LO2;
Empfangen, durch den digitalen Mischer, von RF1 und RF2 über einen einzigen analogen Empfangsweg;
wobei die Kanäle des RF1 und des RF2 trägeraggregiert, CA, sind;
wobei das LO1 ein erstes digitales sinusförmiges Signal mit einer Frequenz $f_1$ umfasst und das LO2 ein zweites digitales sinusförmiges Signal mit einer Frequenz $f_2$ umfasst.

**Revendications**

**1.** Récepteur de radiofréquence, RF, (100), comprenant :

un synthétiseur de fréquence (302), configuré pour :
générer un signal d'horloge (303) ;
un premier synthétiseur de fréquence (304_1), configuré pour :
générer un premier signal porteur numérique, LO1 (305_1), en utilisant le signal d'horloge ;
un second synthétiseur de fréquence (304_2), configuré pour :
générer un second signal porteur numérique, LO2 (305_2), en utilisant le signal d'horloge ; et
un mélangeur numérique (306), configuré pour :

effectuer une conversion descendante sur un premier signal de radiofréquence analogique, RF1 (309_1), jusqu'à une première fréquence intermédiaire, IF1 (310_1), et sur un second signal de radiofréquence analogique, RF2 (309_2), jusqu'à une seconde fréquence intermédiaire, IF2 (310_2), en utilisant le LO1 et le LO2 ;
dans lequel des canaux du RF1 et du RF2 sont agrégés en porteur, CA ;
dans lequel le mélangeur numérique est en outre configuré pour recevoir le RF1 et le RF2 par l'intermédiaire d'un chemin récepteur analogique unique ; et
dans lequel le LO1 comprend un premier signal sinusoïdal numérique à une fréquence $f_1$, et le LO2 comprend un second signal sinusoïdal numérique à une fréquence $f_2$.

**2.** Récepteur RF selon une quelconque revendication précédente, comprenant en outre :

un premier tampon RF (308_1) configuré pour sortir le RF1 à partir d'un premier signal RF reçu (307_1) ; et
un second tampon RF (308_2) configuré pour sortir le RF2 à partir d'un second signal RF reçu (307_2).

**3.** Récepteur RF selon la revendication I, dans lequel les canaux sont situés dans une même bande de fréquence.

**4.** Récepteur RF selon la revendication 1, dans lequel les canaux sont situés dans des bandes de fréquence différentes.

**5.** Récepteur RF selon une quelconque revendication précédente, dans lequel le RF1 comprend :

une première largeur de bande de fréquence, $BW_1$, ;

une première fréquence centrale, $f_{RF1}$ ;
RF2 comprend :

une seconde largeur de bande de fréquence, $BW_2$ ;
une seconde fréquence centrale, $f_{RF2}$.

6. Récepteur RF selon la revendication 4,

dans lequel sensiblement $f_1 = f_{RF1} \pm IF1$, et sensiblement $f_2 = f_{RF2} \pm (\frac{BW_2}{2} + \frac{BW_1}{2} + IF1 + f_{OFFSET})$
, dans lequel $f_{OFFSET}$ est un décalage de fréquence entre IF1 et IF2.

7. Récepteur selon la revendication 4, dans lequel IF1 est sensiblement zéro et IF2 est une basse fréquence intermédiaire.

8. Récepteur RF selon la revendication 6, dans lequel $f_{OFFSET}$ est sensiblement zéro, pour que RF1 et RF2 soient contigus après la conversion descendante.

9. Récepteur RF selon une quelconque revendication précédente, comprenant en outre :

une premier commande de gain (801_1), configurée pour :
commander un gain du LO 1 ; et
une seconde commande de gain (801_2), configurée pour :
commander un gain du LO2.

10. Récepteur RF selon une quelconque revendication précédente, comprenant en outre :
un bloc de sommation (802), configuré pour :

sommer le LO1 et le LO2, produisant un signal de somme numérique (803) ; et
entrer le signal de somme numérique dans le mélangeur numérique.

11. Dispositif mobile, comprenant le récepteur RF selon une quelconque revendication précédente.

12. Procédé, comprenant :

la génération, par un synthétiseur de fréquence, d'un signal d'horloge ;
la génération, par un premier synthétiseur de fréquence, d'un premier signal porteur numérique, LO1, en utilisant le signal d'horloge ;
la génération, par un second synthétiseur de fréquence, d'un second signal porteur numérique, LO2, en utilisant le signal d'horloge ; et
la réalisation d'une conversion descendante, par un mélangeur numérique, sur un premier signal de radiofréquence analogique, RFI, jusqu'à une première fréquence intermédiaire, IF1, et sur un second signal de radiofréquence analogique, RF2, jusqu'à une seconde fréquence intermédiaire, IF2, en utilisant le LO1 et le LO2 ;
la réception, par le mélangeur numérique, du RF1 et du RF2, par l'intermédiaire d'un chemin récepteur analogique unique ;
dans lequel des canaux du RF1 et du RF2 sont agrégés en porteur, CA ;
dans lequel le LO1 comprend un premier signal sinusoïdal numérique à une fréquence $f_1$, et le LO2 comprend un second signal sinusoïdal numérique à une fréquence $f_2$.

FIG. 1

FIG. 2

FIG. 3

304

401 403

Δθ →

303
CLK

404

+ N

303
CLK

N

406

Register

407

408
Phase accumulator

409

Sine/Cosine

ROM

410
Phase to amplitude
converter

305
k →

k →

305

FIG. 4

303 304

$f_{clk}$ →

n-bit DDFS

501 $LO_n$

501 $LO_2$

501 $LO_1$

$LO_0$
501

$RF_{in}$

309

$2^n$

$2^i$

$2^1$

$2^0$

$BB_{out}$

502 502 502 502

310

FIG. 5

LO1+LO2

305
N

309

306

RF

BB

310

FIG. 6

FIG. 7

FIG. 8

FIG. 9

1805 – 1880 MHz

2620 – 2690 MHz

B3

B7

20 MHz

10 MHz

203

201

204

202

1870 MHz

2630 MHz

FIG. 10

301

302

303

304_1

304_2

$f_{ref}$

SX

$DDFS_1$

$DDFS_2$

N

N

801_1

Gain control$_1$

Gain control$_2$

801_2

N

802

N

305_1

Σ

305_2

$LO_1$=1870MHz

$LO_2$=2615MHz

Digital domain

N

803

307_1

20 MHz

1101

1870 MHz

$RF_{in1}$

309_1

LPF

To ADC

307_1

308_1

15 MHz

307_2

$RF_{in2}$

306

310

901

2630 MHz

309_2

307_2   308_2

FIG. 11

**EP 3 868 024 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3035544 A1